# EUROPÄISCHE PATENTANMELDUNG

(11) **EP 1 291 605 A2**
(43) Veröffentlichungstag der Anmeldung: **12.03.2003**
(21) Anmeldenummer: 02017159.1
(22) Anmeldetag: 31.07.2002
(51) Int. Cl.: F41H 7/02

(54) **Container-Adapter für ein gepanzertes Transportfahrzeug**

(30) Priorität: 10.09.2001 DE 10144366
(71) Anmelder: Rheinmetall Landsysteme GmbH, 24159 Kiel (DE)
(72) Erfinder: Nehlsen, Stefan, Dr., 26311 Bad Schwartau (DE); Hass, Frank, 24235 Wendtorf (DE); Witzel, Götz, 24229 Dänischenhaben (DE)
(74) Vertreter: Dietrich, Barbara

(57) **Zusammenfassung**

Für das Transportfahrzeug GTK, welches aus einem Fahrmodul und einem Missionsmodul besteht, wird ein Containeradapter (5) vorgeschlagen, welcher ein vom Fahrmodul getrennte Missionsmodul (2) an Lagerstellen (3) und als Rahmen aufnimmt und den Transport mittels Erzeugung der Containerschnittstellen als handelsüblichen Container mit allen bekannten Transportmitteln ermöglicht.

## Beschreibung

Die Erfindung bezieht sich auf ein gepanzertes Fahrzeug, das sich aus den üblichen Teilen wie Antriebsmotor, Getrieben, Radsätzen oder Kettenlaufwerk, einem Besatzungsraum und einem Gehäuse, das alle Ein- und Anbauten aufnimmt, zusammensetzt. Bei einem Schützenkampffahrzeug werden zum Beispiel mit dem Fahrzeug mehrere Soldaten transportiert, die schnell über eine Heckklappe aussteigen oder aufsitzen können. Bei einem anderen Fahrzeugtyp, dem gepanzerten Transport-Kraftfahrzeug, abgekürzt GTK, wird das Fahrzeug in Module eingeteilt und ein sogenanntes Missionsmodul (2) austauschbar auf dem Chassis oder Fahrmodul (4) untergebracht. Verschiedene Bewaffnungen und Ausrüstungen können dann als Modul austauschbar auf dem Fahrzeug wechselweise mitgeführt werden.

Nach dem Stand der Technik sind verschiedene Vorschläge zum Aufbau von modularen Fahrzeugen und zu gepanzerten Transportfahrzeugen gemacht worden.

In der DE 4219688 wird ein luftverlastbares Panzerfahrzeug aus einem Fahrgestell und darauf angeordneten mehreren Gehäuseteilen aufgebaut, wobei ein Gehäuseteil aus einem fahrgestellfesten Unterteil und einem beweglichen Oberteil besteht, welches bei Lufttransport vertikal eingeschoben werden kann zur Verminderung des Fahrzeugvolumens.

In der DE 19502036 wird ein Kettenfahrzeug schnell und kostensparend an unterschiedliche Einsatzforderungen angepasst, in dem der Wannenaufbau modular gestaltet und aus mindestens zwei Modulen besteht.

In der DE 19619865 wird ein umrüstbares militärisches Radfahrzeug mit trennbaren Modulen dargestellt, das aus einem Grundgehäuse zur Aufnahme der Fahrzeugkomponenten besteht und von einem diesel-mechanischen zu einem diesel-elektrischen Antrieb umgebaut werden kann bei Vorteilen für die Bauhöhe und Ausgestaltung des Fahrzeugs.

Da das Fahrmodul (1) einerseits für sich allein nur eingeschränkt betriebsbereit und fahrfähig ist, andererseits aber auch das Missionsmodul (2) nur in Verbindung mit dem Fahrmodul funktionstüchtig wird und mit dem Fahrmodul zusammen das voll funktionsfähige Gesamtfahrzeug bildet, ist es unter gewissen Bedingungen wie zum Beispiel Ersatzbevorratung und -nachschub oder Instandsetzung erforderlich und nützlich, das Missionsmodul separat vom Fahrmodul mit den üblichen Transporteinrichtungen, auch per Schiffs- und Bahntransport, zu befördern. Bei dem Fahrmodul ist dies anders gelagert, da das Fahrmodul auf eigenen Rädern oder Ketten, auch bei einer Verladung, bewegt werden kann.

Aufgabe der Erfindung ist es, eine Vorrichtung zu schaffen, mit der das Missionsmodul für sich und getrennt vom Fahrmodul transportiert werden kann.

Dabei sollen folgende Merkmale berücksichtigt werden:
- Das Missionsmodul soll mit handelsüblichen Vorrichtungen transportiert und gehandhabt werden.
- Das Missionsmodul soll als Einheit transportiert werden.
- Das Missionsmodul soll wie ein handelsüblicher Container transportiert und gehandhabt werden.

Diese Aufgabe wird erfindungsgemäß durch die kennzeichnenden Merkmale des Anspruchs 1 gelöst. Weitere Merkmale ergeben sich aus den Unteransprüchen.

Erfindungsgemäß wird ein Container-Adapter für den Transport des Missionsmoduls vorgeschlagen, so dass das Missionsmodul als Container gehandhabt und transportiert werden kann.

Die Vorteile der Erfindung liegen darin, dass alle Handhabungs- und Transportgeräte für genormte Container Verwendung finden können. Insbesondere die eingeführte weltweite Logistik für genormte Container kann vollständig benutzt werden. Damit kann auf spezielle militärische Transportmittel vielfach weitgehend verzichtet werden.

Ausführungsbeispiele der Erfindung sind in den Zeichnungen schematisch dargestellt und werden im folgenden näher beschrieben. Es zeigen:
- Figur 1:: eine Seitenansicht des Fahrzeuges
- Figur 2:: eine Seitenansicht des Fahrmoduls ohne Missionsmodul
- Figur 3:: eine Seitenansicht des Adapters mit Missionsmodul

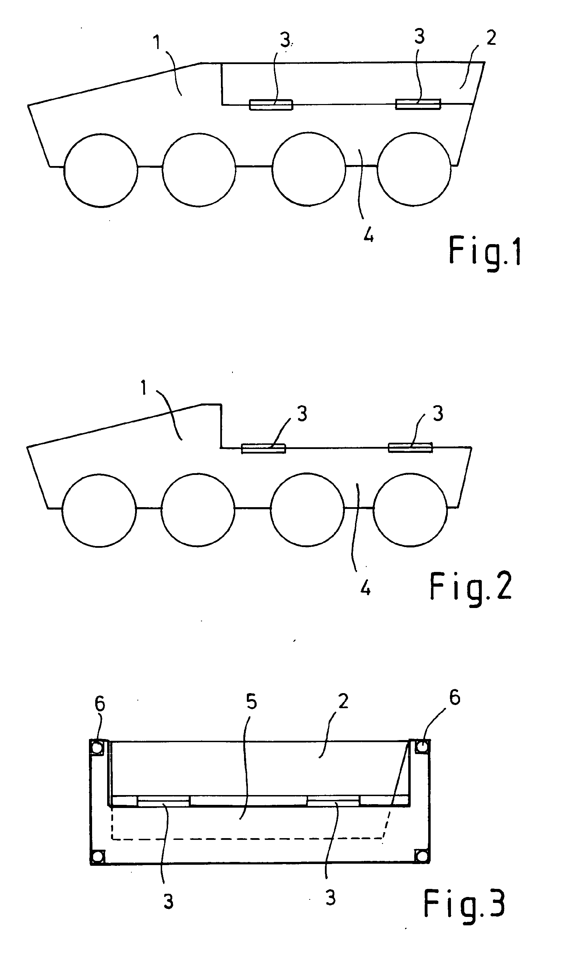

Figur 1 zeigt ein bekanntes Fahrzeug 1 bestehend aus einem Fahrmodul 4 mit einem Radfahrwerk und dem oben hinten mittels Lagerpunkten 3 angebauten Missionsmodul 2. Das Missionsmodul enthält spezifische Ausrüstungen für eine Aufgabe oder Mission und es ist demontierbar, austauschbar befestigt, so daß mittels Missionsmodulen spezifische Fahrzeuge ausgerüstet werden können, die allesamt ein identisches Fahrmodul besitzen.

Figur 2 zeigt ein Fahrmodul 1 mit Lagerpunkten 3, bei dem das Missionsmodul 2 entfernt ist.

In Figur 3 ist das Missionsmodul 2 mittels Lagerpunkten 3 in einem Containeradapter 5 gelagert, welcher einem genormten Container bezüglich Volumen, Abmessungen und Container-Aufnahmepunkten 6 vollständig entspricht.

Das Missionsmodul wird mittels den Lagerstellen 3 mit einem Containeradapter 5 verbunden. Der Adapter 5 ist als Rahmen ausgebildet, welcher an seinen Ecken die bekannten und genormten Container-Aufnahmepunkte 6 besitzt, genau wie ein entsprechender Container. Der Adapter 5 simuliert einen genormten Container vollständig und stellt die genormte Schnittstelle eines üblichen Containers zur Verfügung. Für Krane und Fahrzeuge, die Container transportieren, wird das mittels Adapter 5 ergänzte Missionsmodul 2 zu einem normalüblichen Container und wird entsprechend genauso transportiert. Die Lagerstellen 3, die eine einheitliche Lagerung und Befestigung des Missionsmoduls sicherstellen sind entsprechend am Fahrmodul 4, am Adapter 5 und am Missionsmodul 2 zueinander passend vorgesehen, damit das Missionsmodul in den bezeichneten Fällen einheitlich gelagert und befestigt wird.

### Bezugszeichenliste

- 1: Fahrzeug
- 2: Missionsmodul
- 3: Lagerpunkt
- 4: Fahrmodul
- 5: Containeradapter
- 6: Container-Aufnahmepunkt

## Patentansprüche

1. Vorrichtung für ein gepanzertes Transportfahrzeug (1) mit einem Radfahroder Kettenlaufwerk und einem Antrieb zur Fortbewegung sowie einem Fahrzeugaufbau zur Aufnahme und Einbau aller Komponenten für den Betrieb des Fahrzeugs einschliesslich einer Fahrzeugbesatzung und einer spezifischen Ausrüstung, welches aus den Modulen Fahrmodul (4) und Missionsmodul (2) zu einem vollständigen Gesamtfahrzeug (1) gebildet wird,
**dadurch gekennzeichnet,**
**dass** ein Rahmen als Adapter (5) mit Lagerstellen (3) zur Aufnahme des Missionsmoduls (2) im Rahmen und mit Container-Aunahmepunkten (6) außen am Rahmen ausgebildet wird, welcher die vollständige Schnittstellenabbildung eines handelsüblichen Containers einer genormten Größe darstellt.

2. Vorrichtung nach Anspruch 1
**dadurch gekennzeichnet,**
**dass** Lagerpunkte (3) am Missionsmodul (2) und ebenso als Gegenstück am Fahrmodul (4) angebracht sind, welche das Missionsmodul demontierbar auf dem Fahrmodul befestigen.

3. Vorrichtung nach Anspruch 2
**dadurch gekennzeichnet,**
**dass** Lagerpunkte (3) ebenfalls und passend am Adapter (5) vorhanden sind, welche das Missionsmodul auf oder in dem Adapter lagern und befestigen.

4. Vorrichtung nach einem der Ansprüche 1 - 3
**dadurch gekennzeichnet,**
**dass** ein Rahmen als Adapter (5) so ausgebildet ist, dass er in Form, Größe und Aufnahmepunkten (6) vollständig einem genormten Container gleichgestellt ist.

5. Vorrichtung nach Anspruch 4
**dadurch gekennzeichnet,**
**dass** der Rahmen gefaltet oder zusammengelegt ist und zu einer Funktionsstellung als Adapter (5) aufgebaut wird und dann voll funktionsfähig einsetzbar ist als Adapter zur Aufnahme des Moduls (2).

6. Vorrichtung nach einem der Ansprüche 1 - 5
**dadurch gekennzeichnet,**
**dass** das Missionsmodul (2), welches in den Adapter (5) eingesetzt und zu einer Containereinheit befestigt ist, als Containereinheit mit allen bekannten Container-Transport- und -hebemitteln transportierbar ist.

7. Vorrichtung nach einem der Ansprüche 1 - 6
**dadurch gekennzeichnet,**
**dass** das Missionsmodul, welches in einen Adapter (5) eingesetzt ist, nach Hinzufügung einer Versorgungseinheit für die Versorgung des Missionsmoduls autark für sich und ohne Fahrmodul betreibbar ist, wobei die Versorgungseinheit am Missionsmodul oder im Adapter eingebaut ist.
